# EUROPÄISCHE PATENTSCHRIFT

(11) **EP 0 997 489 B1**
(45) Veröffentlichungstag und Bekanntmachung des Hinweises auf die Patenterteilung: **03.12.2003**
(21) Anmeldenummer: 99121344.8
(22) Anmeldetag: 26.10.1999
(51) Int. Cl.: C08G 77/392, C08L 9/00

(54) **Schwefelfunktionelle Polyorganosiloxane**
Sulfur-contanining organopolysiloxanes
Polyorganosiloxanes contenant du soufre

(30) Priorität: 27.10.1998 DE 19849404; 12.02.1999 DE 19905820
(43) Veröffentlichungstag der Anmeldung: 03.05.2000
(73) Patentinhaber: Degussa AG, 40474 Düsseldorf (DE)
(72) Erfinder: Luginsland, Hans-Detlef, Dr., 50968 Köln (DE); Krafczyk, Roland, Dr., 31135 Hildesheim (DE); Lortz, Wolfgang, Dr., 63607 Wächtersbach (DE)

(56) Entgegenhaltungen:
- WO-A-99/02602
- DE-A- 2 141 159
- US-A- 4 113 696

## Beschreibung

Die Erfindung betrifft neue schwefelfunktionelle Polyorganosiloxane, ein Verfahren zu deren Herstellung sowie deren Verwendung in Kautschukmischungen und zur Herstellung von Formkörpern.

Es ist bekannt, schwefelhaltige Organosiliciumverbindungen wie 3-Mercaptopropyl-triethoxysilan oder Bis-(3-[Triethoxysilyl]-propyl)tetrasulfan, als Silanhaftvermittler oder Verstärkungsadditiv in oxidisch gefüllten Kautschukmischungen für Laufflächen und andere Teile von Fahrzeugreifen einzusetzen. (DE 2 141 159, DE 2 212 239, US 3 978 103, US 4 048 206).

Des weiteren ist bekannt, daß schwefelhaltige Silanhaftvermittler bei der Herstellung von Dichtungsmassen, Gießformen für den Metallguß, Farb- und Schutzanstrichen, Klebstoffen, Asphaltmischungen und oxidisch gefüllten Kunststoffen eingesetzt werden können.

Diese Kupplungs- oder Verbindungsagenzien bilden sowohl zum Füllstoff als auch zum Elastomer Bindungen und bewirken somit zwischen der Füllstoffoberfläche und dem Elastomer eine gute Wechselwirkung. Sie erniedrigen die Mischungsviskosität und erleichtern die Dispersion des Füllstoffs.

In EP 0784 072 A1 wird die Verwendung einer Kombination aus einem Silanhaftvermittler und einem funktionalisierten Polyorganosiloxans mit mindestens einer funktionellen Siloxylguppe, die an die Kieselsäure binden kann, beschrieben.

Das 3-Mercaptopropyltriethoxysilan ist als Haftvermittler in Kautschukmischungen in der Lage, bei einer vergleichsweise niedrigen Dosierung eine verbesserte Kieselsäure/Elastomer Kupplung herbeizuführen (US-A 3 350 345, FR-A-2 094 859). Aufgrund der hohen Reaktivität der SH-Gruppe und folglich der bekannten Neigung zur Vorvernetzung sowie der erhöhten Mischungsviskosität ist die Verarbeitbarkeit der Mischungen und deren industrielle Anwendung jedoch beschränkt. Ferner ist bekannt, daß die Zugabe eines abschirmenden Additivs, bestehend aus einem funktionellen Polyorganosiloxan mit mindestens einer funktionellen Siloxylgruppe, die Reaktivität herabsetzt, die Mischungsviskosität erniedrigt und so eine Verarbeitbarkeit solcher Kautschukmischungen gewährleistet (EP 0784 072 A1).

Es ist aus ökonomischer Sicht als nachteilig anzusehen, zusätzlich zu den in EP 0784 072 A1 beschriebenen Silanhaftvermittlern auch ein siloxylfunktionalisiertes Polyorganosiloxan der Gummimischung beifügen zu müssen.

Des weiteren ist bekannt, daß die Verwendung von handelsüblichen Silanhaftvermittlern (DE 22 55 577) mit drei Alkoxysubstituenten am Siliciumatom zur Freisetzung beträchtlicher Mengen an Alkohol während des Mischprozesses führt.

Gegenstand der Erfindung sind schwefelfunktionelle Polyorganosiloxane der allgemeinen Formel I 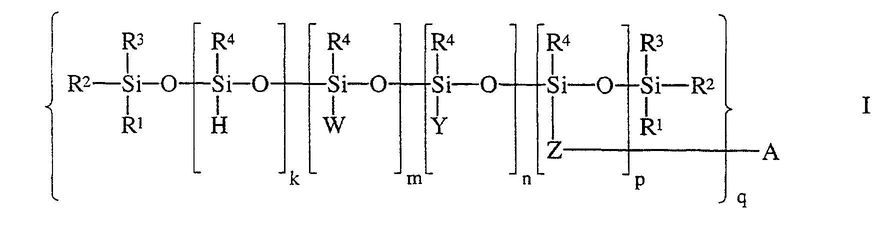 worin
R¹, R², R³, R⁴ unabhängig voneinander, H, (C₁ - C₄)Alkyl, (C₁ - C₄)Alkoxy, (C₁ - C₄)Haloalkoxy, (C₁ - C₄)Haloalkyl, Phenyl, Aryl oder Aralkyl und
W für eine Gruppe, die an die Kieselsäure binden kann, steht und bevorzugt (C₁ - C₄)Alkoxy oder (C₁ - C₄) Haloalkoxy sein kann und
Y Alkyl, Haloalkyl, Phenyl, Aryl oder Aralkyl und Z einen Alkylidenrest mit 0 - 6 Kohlenstoffatomen bedeuten und
A für eine Gruppe steht, die eine Bindung mit mindestens einem Elastomer der Kautschukmischung eingehen kann: für q = 1 bevorzugt eine Mercapto-(SH) und Thiocyanatogruppe (SCN) und für q = 2 ein Disulfid (S₂) und ein Polysulfid (Sₓ) mit x = 2 - 10 und H für Wasserstoff steht und
die Summe k + m + n + p ≥ 3 sowie k = n = 0 sein kann.

Als bevorzugte Polyorganosiloxane hinsichtlich der Erfindung sind als erste zu erwähnen folgende aus linearen statistischen, aus Sequenz- oder Blockpolymeren gebildeten, in denen R¹, R², R³ und R⁴ = Alkyl, insbesondere Methyl, W = Alkoxy, insbesondere Ethoxy, Y = Alkyl, insbesondere n-Propyl, Z = Alkyliden, insbesondere CH₂CH₂CH₂, m und p = 1 - 100 sowie k und n = 0 - 50, wobei die Summe aus k + m + n + p = 10 - 150, insbesondere 20 - 100 sein soll.

In einer bevorzugten Ausführungsform kann R¹, R², R³, R⁴ = Methyl, W = Ethoxy, Y = n-Propyl, Z = CH₂CH₂CH₂, A = Mercapto (SH), Thiocyanato (SCN) für q = 1 und A = Polysulfid (Sₓ) und Disulfid (S₂) für q = 2 und k + m + n + p = 10 - 150, insbesondere 20 - 100 bedeuten.

Die erfindungsgemäßen Polyorganosiloxane mit A = Sₓ können dabei zyklisch, verzweigt oder linear ausgebildet sein.

Die erfindungsgemäßen Verbindungen können sowohl als einzelne Verbindung mit einem definierten Molekulargewicht, als auch als Oligomerengemisch mit einer Molekulargewichtsverteilung vorliegen.

Die Herstellung der erfindungsgemäßen Verbindungen der allgemeinen Formel I kann in zwei Stufen in einfacher Weise erfolgen, indem Verbindungen der allgemeinen Formel II 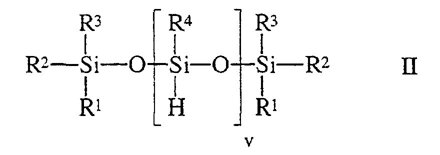 worin
R¹, R², R³ und R⁴ die oben angegebene Bedeutung besitzen und v eine Zahl zwischen 2 und 150 sein kann, mit Verbindungen der allgemeinen Formel III 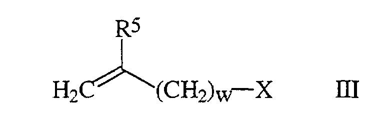
worin
R⁵ H, Alkyl und X Fluor, Chlor, Brom und Iod, bevorzugt Chlor, sein soll und w eine Zahl zwischen 0 und 15, bevorzugt w = 1 und R⁵ = H (Allylchlorid) sowie R⁵ = Methyl (Methallylchlorid) sein soll, unter katalytischen Bedingungen nach einem Mechanismus der Hydrosilylierung unter Verwendung eines Katalysators aus der Familie der Platinmetalle, gegebenenfalls in einem Lösungsmittel, und gegebenenfalls bei Reaktionstemperaturen zwischen 20 °C und 200 °C, bei Drücken zwischen Normaldruck oder einem Überdruck bis zu 6 bar zu Verbindungen der allgemeinen Formel IV umgesetzt werden 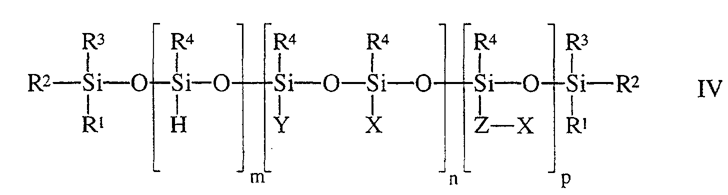
worin
R¹, R², R³, R⁴, X, Y, Z, m, n und p die oben angegebene Bedeutung besitzen.

Im zweiten Schritt können Verbindungen der allgemeinen Formel IV mit MSH, MSCN oder M₂Sₓ,
wobei
M ein Metallion und x im statistischen Mittel eine Zahl zwischen 2 und 10 sein kann oder mit M₂S und S, wobei M ein Metallion ist, in einem Alkohol W-H, worin W die oben angegebene Bedeutung besitzt, gegebenenfalls bei Reaktionstemperaturen zwischen 20 °C und 150 °C und gegebenenfalls unter katalytischen Bedingungen, bei Normaldruck zu den erfindungsgemäßen Verbindungen der allgemeinen Formel I umgesetzt werden.

Für die Herstellung der Verbindung der Formel IV kann man vorteilhafterweise wie folgt vorgehen: Zu einer Verbindung der Formel II werden ohne Lösungsmittel bei Normaldruck oder Überdruck bis zu 6 bar, vorzugsweise bei Normaldruck, bei Temperaturen zwischen 20 °C und 200 °C, besonders bevorzugt bei 100 °C bis 150 °C ein Gemisch im Unterschuß, bestehend aus einer Verbindung der Formel III, worin X, R⁵ und w die oben angegebene Bedeutung haben, und ein Platin-Katalysator, bevorzugt ein Karstedt-Typ gegeben. Nach 1 h bis 8 d, vorzugsweise 1 bis 24 h, Rühren bei Normaldruck oder Überdruck bis zu 6 bar, vorzugsweise bei Normaldruck, bei Temperaturen zwischen 20 °C und 200 °C, besonders bevorzugt bei 100 °C bis 120 °C ist die Reaktion beendet und die neuen Verbindungen des Typs IV verbleiben meist als viskose Flüssigkeiten.

Vorteilhafterweise können die Umsetzungen unter absoluten Bedingungen, d. h. unter Feuchtigkeitsausschluß durchgeführt werden.

Verschiedene Verfahren der oben beschriebenen Art zur Hydrosilylierung sind bekannt in US-A-3 159 601, EP-A-57 459, US-A-3 419 593, US-A-3 715 334, US-A-3 775 452 (Karstedt).

Aufgrund unterschiedlicher Selektivitäten der Katalysatoren kann es zur Bildung des Fragments nach Formel V kommen 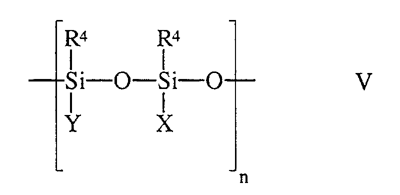 worin
R⁴, X, Y und n die oben angegebene Bedeutung besitzen.

Bei einer Selektivität von 100% ist in Verbindung IV beziehungsweise im Fragment V n = 0.

In einem zweiten Schritt kann man zur Herstellung der erfindungsgemäßen Verbindung der Formel I vorteilhafterweise wie folgt vorgehen: Zu einer Suspension von MSH, MSCN oder M₂S und S, bzw. vorher hergestelltem M₂Sₓ, in einem Alkohol W-H wird eine Verbindung der Formel IV, worin R¹, R², R³, R⁴, W, X, Y, Z, m, n und p die oben angegebene Bedeutung haben, gegeben. Dabei kommt es zur Bildung von Wasserstoffgas. Man erhitzt 1 h bis 8 d, vorzugsweise 1 bis 24 h bei Normaldruck, auf Temperaturen zwischen 20 °C und 150 °C, besonders bevorzugt bei der Siedetemperatur des Alkohols W-H und filtriert nach Reaktionsende vom entstandenen Niederschlag ab. Nach dem Entfernen des überschüssigen Alkohols W-H verbleiben die neuen Verbindungen des Typs I i. d. R. als viskose Flüssigkeiten oder niedrigschmelzende Feststoffe.

Die Alkoholyse und Schwefelfunktionalisierung erfolgen bei dem erfindungsgemäßen Verfahren gleichzeitig. Es ist kein weiterer Katalysator für die Alkoholyse erforderlich. Bei einer vollständigen Alkoholyse ist in Verbindung I k = 0. Des weiteren wird die Si-X Gruppe in Fragment V simultan zu Si-W konvertiert.

Als bevorzugte Metallionen M können Ammoniumionen, Natriumionen oder Kaliumionen verwendet werden. Besonders geeignet ist dabei die Verwendung der entsprechenden Natriumverbindung.

Verschiedene Verfahren der oben beschriebenen Art zur Sulfidierung sind bekannt und in JP 722 8588, US-A 54 05 985 und US-A 54 66 848 beschrieben.

Unter der Bezeichnung "Alkyl" sind sowohl "geradkettige" als auch "verzweigte" Alkylgruppen zu verstehen. Unter der Bezeichnung "geradkettige Alkylgruppe" sind beispielsweise Reste wie Methyl-, Ethyl-, n-Propyl, n-Butyl, n-Pentyl, n-Hexyl, unter "verzweigter Alkylgruppe" Reste wie beispielsweise Isopropyl oder tert.-Butyl zu verstehen. Die Bezeichnung Halogen steht für Fluor, Chlor, Brom oder Iod. Die Bezeichnung "Alkoxy" stellt Reste wie beispielsweise Methoxy, Ethoxy, Propoxy, Butoxy, Isopropoxy, Isobutoxy oder Pentoxy dar.

Unter "Aryl" sind im erfindungsgemäßen Rahmen (C₁ - C₆)alkyl-, (C₁ - C₆)alkoxy-, halogen- oder mit Heteroatomen wie N, O, P oder S substituierte Phenyle, Biphenyle, Phenole oder sonstige benzoide Verbindungen zu verstehen. "Arylalkyl" ist so zu verstehen, daß die oben bezeichneten "Aryle" über eine (C₁ - C₆)Alkylkette, die ihrerseits (C₁ - C₄)alkyl- oder halogensubstituiert sein kann, mit dem entsprechenden Siliciumatom verbunden ist. Verfügt "Aryl" über ein Heteroatom wie O oder S, dann kann die (C₁ - C₆)Alkylkette auch über das Heteroatom mit dem Siliciumatom eine Verbindung herstellen.

Bei Angabe der Substituenten, wie z. B. (C₁ - C₄) Alkoxy, bezeichnet die Zahl im Index die Anzahl aller Kohlenstoffatome im Rest.

Der Vorteil der erfindungsgemäßen multifunktionellen Polyorganosiloxane besteht in der alleinigen Verwendung als Silanhaftvermittler in kieselsäureverstärkten Kautschukmischungen, wobei diese mindestens eine funktionelle Siloxylgruppe enthalten, die zur Ausbildung einer chemischen und/oder physikalischen Bindung mit den Hydroxylgruppen an der Oberfläche der Kieselsäurepartikel befähig ist und wenigstens eine Schwefelfunktion enthalten, die zu einer chemischen Bindung an die Polymerketten fähig ist. Ferner führt die Verwendung der erfindungsgemäßen multifunktionellen Polyorganosiloxane, bedingt durch den geringeren Anteil an Alkoxyfunktionen, gegenüber dem Stand der Technik, zu einer verringerten Alkoholfreisetzung während des Mischprozesses.

Die erfindungsgemäß schwefelfunktionellen Polyorganosiloxane eignen sich besonders gut für die Verwendung in Kautschukmischungen.

Kautschukmischungen, die die erfindungsgemäßen schwefelfunktionalisierten Polyorganosiloxane als Haftvermittler oder Verstärkungsadditiv enthalten und nach einem Vulkanisationsschritt resultierende Formkörper, insbesondere Luftreifen oder Reifenlaufflächen, besitzen nach der erfindungsgemäßen Durchführung der Verfahren einen niedrigen Rollwiderstand bei gleichzeitig guter Nässehaftung und hohem Abriebwiderstand.

Gegenstand der vorliegenden Erfindung sind weiterhin Kautschukmischungen, die die erfindungsgemäßen schwefelfunktionellen Polyorganosiloxane enthalten. Die Kautschukmischungen können weiterhin Kautschuk, Füllstoff, insbesondere auch gefällte Kieselsäure und gegebenenfalls weitere Kautschukhilfsmittel, sowie mindestens ein erfindungsgemäßes schwefelfunktionelles Polyorganosiloxan, in Mengen von 0,1 bis 15 Gew.-%, besonders bevorzugt 5-10 Gew.-%, bezogen auf die Menge des eingesetzten oxidischen Füllstoffs, enthalten.

Bei der Verwendung der erfindungsgemäßen schwefelfunktionellen Polyorganosiloxane in Kautschukmischungen zeigen sich gegenüber den bekannten Mischungen Vorteile in den statischen und dynamischen Vulkanisatdaten.

Die Zugabe der erfindungsgemäßen schwefelfunktionellen Polyorganosiloxane, sowie die Zugabe der Füllstoffe erfolgt bevorzugt bei Massetemperaturen von 80 bis 200 °C. Sie kann jedoch auch später bei tieferen Temperaturen (40 bis 100 °C) z.B. zusammen mit weiteren Kautschukhilfsmitteln erfolgen.

Die erfindungsgemäßen schwefelfunktionellen Polyorganosiloxane können sowohl in reiner Form als auch aufgezogen auf einen inerten organischen oder anorganischen Träger dem Mischprozeß zugegeben werden. Bevorzugte Trägermaterialien sind Kieselsäuren, natürliche oder synthetische Silikate, Aluminiumoxid oder Ruße.

Als Füllstoffe kommen für die erfindungsgemäßen Kautschukmischungen in Frage:
- Ruße: Die hierbei zu verwendenden Ruße sind nach dem Flammruß-, Furnace- oder Gasruß-Verfahren hergestellt und besitzen BET-Oberflächen von 20 bis 200 m²/g. Die Ruße können ggf. auch Heteroatome wie z.B. Si enthalten.
- hochdisperse Kieselsäuren, hergestellt z.B. durch Fällung von Lösungen von Silikaten oder Flammenhydrolyse von Siliciumhalogeniden mit spezifischen Oberflächen von 5 bis 1000, vorzugsweise 20 bis 400 m²/g (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Znund Titanoxiden vorliegen.
- Synthetische Silikate, wie Aluminiumsilikat, Erdalkalisilikate wie Magnesiumsilikat oder - Calciumsilikat, mit BET-Oberflächen von 20 bis 400 m²/g und Primärteilchendurchmessern von 10 bis 400 nm.
- Natürliche Silikate, wie Kaolin und andere natürlich vorkommende Kieselsäuren.
- Glasfasern und Glasfaserprodukte (Matten, Stränge) oder Mikroglaskugeln.

Bevorzugt können Ruße mit BET-Oberflächen von 20 bis 400 m²/g oder hochdisperse Kieselsäuren, hergestellt durch Fällung von Lösungen von Silikaten, mit BET-Oberflächen von 20 bis 400 m²/g in Mengen von 5 bis 150 Gew.-Teilen, jeweils bezogen auf 100 Teile Kautschuk, eingesetzt werden.

Die genannten Füllstoffe können alleine oder im Gemisch eingesetzt werden. In einer besonders bevorzugten Ausführung des Verfahrens können 10 bis 150 Gew.-Teile helle Füllstoffe, gegebenenfalls zusammen mit 0 bis 100 Gew.-Teilen Ruß, sowie 0,1 bis 15 Gew.-Teile, bevorzugt 5 bis 10 Gew.-Teile einer Verbindung der Formel I, jeweils bezogen auf 100 Gew.-Teile des eingesetzten Füllstoffs, zur Herstellung der Mischungen eingesetzt werden.

Für die Herstellung erfindungsgemäßer Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen u. a.
- Polybutadien (BR)
- Polyisopren (IR)
- Styrol/Butadien-Copolymerisate mit Styrolgehalten von 1 bis 60, vorzugsweise 2 bis 50 Gew.-% (SBR)
- Isobutylen/Isopren-Copolymerisate (IIR)
- Butadien/Acrylnitril-Copolymere mit Acrylnitrilgehalten von 5 bis 60, vorzugsweise 10 bis 50 Gew.-% (NBR)
- teilhydrierter oder vollständig hydrierter NBR-Kautschuk (HNBR)
- Ethylen/Propylen/Dien-Copolymerisate (EPDM)
sowie Mischungen dieser Kautschuke. Für die Herstellung von Kfz-Reifen sind insbesondere anionisch polymerisierte L-SBR-Kautschuke mit einer Glastemperatur oberhalb von -50 °C sowie deren Mischungen mit Dienkautschuken von Interesse.

Die erfindungsgemäßen Kautschukvulkanisate können weitere Kautschukhilfsprodukte, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Wachse, Streckmittel, organische Säuren, Verzögerer, Metalloxide sowie Aktivatoren, wie Triethanolamin, Polyethylenglykol, Hexantriol, die der Kautschukindustrie bekannt sind, enthalten.

Die Kautschukhilfsmittel werden in üblichen Mengen, die sich unter anderem nach dem Verwendungszweck richten, eingesetzt. Übliche Mengen sind z.B. Mengen von 0,1 bis 50 Gew.-% bezogen auf Kautschuk. Die schwefelfunktionalisierten Polyorganosiloxane können alleine als Vernetzer dienen. In der Regel empfiehlt sich die Zugabe von weiteren Vernetzern. Als weitere bekannte Vernetzer können Schwefel oder Peroxide eingesetzt werden. Die erfindungsgemäßen Kautschukmischungen können darüber hinaus Vulkanisationsbeschleuniger enthalten. Beispiele für geeignete Vulkanisationsbeschleuniger sind Mercaptobenzthiazole, Sulfenamide, Guanidine, Thiurame, Dithiocarbamate, Thioharnstoffe und Thiocarbonate. Die Vulkanisationsbeschleuniger und Schwefel oder Peroxide werden in Mengen von 0,1 bis 10 Gew.-%, bevorzugt 0.1 bis 5 Gew.-%, bezogen auf Kautschuk, eingesetzt.

Die Vulkanisation der erfindungsgemäßen Kautschukmischungen kann bei Temperaturen von 100 bis 200 °C, bevorzugt 130 bis 180 °C, gegebenenfalls unter Druck von 10 bis 200 bar erfolgen. Die Abmischung der Kautschuke mit dem Füllstoff, gegebenenfalls Kautschukhilfsmitteln und den erfindungsgemäßen schwefelfunktionalisierten Polyorganosiloxanen kann in üblichen Mischaggregaten, wie Walzen, Innenmischern und Mischextrudern, durchgeführt werden. Die erfindungsgemäßen Kautschukvulkanisate eignen sich zur Herstellung von Formkörpern, z.B. für die Herstellung von Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

### Beispiele 1 bis 3: Herstellung der schwefelfunktionalisierten Polyorganosiloxane in zwei Stufen

### Beispiel 1:

1. Stufe: Zu 100.0 g (38.9 mmol) Siliconöl Baysilone-Öl MH 15 (Handelsprodukt der Bayer AG) der Formel II mit R¹ = R² = R³ = R⁴ = Methyl, v = 40 werden bei 100 °C ein Gemisch bestehend aus 59.6 g (779.0 mmol) Allylchlorid (Handelsprodukt der Firma Aldrich) und 1 ml einer 1%igen Platin-Lösung in Toluol (Karstedt-Katalysator) innerhalb von 2 h zugetropft. Dabei steigt die Temperatur auf 140 °C an. Nach beendeter Zugabe wird 30 min. lang bei 100 °C gerührt. Nach dem Abkühlen erhält man 156.3 g (98% d. Theorie) der Verbindung der Formel IV mit R¹ = R² = R³ = R⁴ = Methyl, X = Cl, Y = CH₂-CH₂-CH₃, Z = CH₂-CH₂-CH₂, m = 10, n = 10, p = 10 als hellgelbe Flüssigkeit.
   ¹H NMR (CDCl₃): δ -0.2 - 0.2 (m, 138 H, Si-CH₃), 0.39 (m, 20 H, CH₂-CH₂-CH₃), 0.55 (m, 20 H, CH₂-CH₂-CH₂-Cl), 0.85 (m, 30 H, CH₂-CH₂-CH₃), 1.28 (m, 20 H, CH₂-CH₂-CH₃), 1.68 (s, 20 H, CH₂-CH₂-CH₂-Cl), 3.35 (s, 20 H, CH₂-CH₂-CH₂-Cl), 4.58 (s, ¹*J*(¹H-²⁹Si) = 250.1 Hz, 10 H, Si-H).
2. Stufe: Zu einer Suspension von 57.1 g (327.9 mmol) Na₂S₄ in 300 ml Ethanol (W = Ethoxy) werden bei Raumtemperatur innerhalb von 45 min. 102.2 g (24.9 mmol) der Verbindung der Formel IV mit R¹ = R² = R³ = R⁴ = Methyl, X = Cl, Y = CH₂-CH₂-CH₃, Z = CH₂-CH₂-CH₂, m = 10, n = 10, p = 10 zugetropft. Während des Zutropfens entweicht Wasserstoff, und die Temperatur steigt auf 45 °C an. Gleichzeitig fällt ein Feststoff aus. Nach beendetem Zutropfen wird 3 h lang bei 80 °C (Refluxieren) gerührt. Danach läßt man abkühlen und filtriert vom entstandenen NaCl ab. Nach dem destillativen Entfernen des Lösungsmittels verbleiben 75.0 g (65% d. Theorie) der Verbindung der Formel I mit R¹ = R² = R³ = R⁴ = Methyl, A = Sₓ, W = Ethoxy, Y = CH₂-CH₂-CH₃, Z = CH₂-CH₂-CH₂, k = 0, m = 20, n = 10, p = 10.
   ¹H NMR (CDCl₃): δ -0. 2 - 0.2 (m, 138 H, Si-CH₃), 0.42 (m, 20 H, CH₂-CH₂-CH₃), 0.58 (m, 20 H, CH₂-CH₂-CH₂-S), 0.88 (m, 30 H, CH₂-CH₂-CH₃), 1.08 (s, 60 H, Si-O-CH₂-CH₃), 1.30 (m, 20 H, CH₂-CH₂-CH₃), 1.70 (s, 20 H, CH₂-CH₂-CH₂-S), 2.5 - 2.9 (m, 20 H, CH₂-CH₂-CH₂-S), 3.62 (s, ³*J*(¹H-²⁹Si) = 150.0 Hz, 40 H, Si-O-CH₂-CH₃).

### Beispiel 2:

1. Stufe: Zu 216.8 g (84.5 mmol) Siliconöl Baysilone-Öl MH 15 der Formel II mit R¹ = R² = R³ = R⁴ = Methyl, v = 40 werden bei 100 °C ein Gemisch bestehend aus 12.9 g (169.0 mmol) Allylchlorid und 220 µl einer 1%igen Platin-Lösung in Toluol (Karstedt-Katalysator) innerhalb von 30 min. zugetropft. Dabei steigt die Temperatur auf 130 °C an. Nach beendeter Zugabe wird 1 h lang bei 100 °C gerührt. Nach dem Abkühlen erhält man 226.9 g (99% d. Theorie) der Verbindung der Formel IV mit R¹ = R² = R³ = R⁴ = Methyl, X = Cl, Y = CH₂-CH₂-CH₃, Z = CH₂-CH₂-CH₂, m = 37, n = 1, p = 1 als hellgelbe Flüssigkeit.
   ¹H NMR (CDCl₃): δ -0.2 - 0.1 (m, 138 H, Si-CH₃), 0.36 (m, 2 H, CH₂-CH₂-CH₃), 0 . 48 (m, 2 H, CH₂-CH₂-CH₂-Cl), 0.76 (t, ³*J*(¹H-¹H) = 8.3 Hz, 3 H, CH₂-CH₂-CH₃), 1.20 (m, 2 H, CH₂-CH₂-CH₃), 1.62 (m, 2 H, CH₂-CH₂-CH₂-Cl), 3.28 (m, 2 H, CH₂-CH₂-CH₂-Cl), 4.52 (s, ¹*J*(¹H-²⁹Si) = 250.1 Hz, 37 H, Si-H).
2. Stufe: Zu einer Suspension von 3.2 g (18.4 mmol) Na₂S₄ in 160 ml Ethanol (W = Ethoxy) werden bei Raumtemperatur innerhalb von 1 h 50.0 g (18.4 mmol) der Verbindung der Formel IV mit R¹ = R² = R³ = R⁴ = Methyl, X = Cl, Y = CH₂-CH₂-CH₃, Z = CH₂-CH₂-CH₂, m = 37, n = 1, p = 1 zugetropft. Während des Zutropfens entweicht Wasserstoff, und die Temperatur steigt auf 50 °C an. Gleichzeitig fällt ein Feststoff aus. Nach beendetem Zutropfen wird 4 h lang bei 80 °C (Refluxieren) gerührt. Danach läßt man abkühlen und filtriert vom entstandenen NaCl ab. Nach dem destillativen Entfernen des Lösungsmittels verbleiben 70.4 g (86% d. Theorie) der Verbindung der Formel I mit R¹ = R² = R³ = R⁴ = Methyl, A = Sₓ, W = Ethoxy, Y = CH₂-CH₂-CH₃, Z = CH₂-CH₂-CH₂, k = 0, m = 38, n = 1, p = 1.
   ¹H NMR (CDCl₃): δ -0.2 - 0.2 (m, 138 H, Si-CH₃), 0.44 (m, 2 H, CH₂-CH₂-CH₃), 0 . 56 (m, 2 H, CH₂-CH₂-CH₂-S), 0 . 82 (m, 3 H, CH₂-CH₂-CH₃), 1.08 (s, 114 H, Si-O-CH₂-CH₃), 1.28 (m, 2 H, CH₂-CH₂-CH₃), 1.70 (s, 2 H, CH₂-CH₂-CH₂-S), 2.5 - 2.9 (m, 2 H, CH₂-CH₂-CH₂-S), 3 . 64 (m, 76 H, Si-O-CH₂-CH₃).

### Beispiel 3:

1. Stufe: Zu 200.0 g (77.9 mmol) Siliconöl Baysilone-Öl MH 15 der Formel II mit R¹ = R² = R³ = R⁴ = Methyl, v = 40 wird bei 110 °C ein Gemisch, bestehend aus 59.6 g (779.0 mmol) Allylchlorid und 1 ml einer 1%igen Platin-Lösung in Toluol (Karstedt-Katalysator), innerhalb von 60 min. zugetropft. Dabei steigt die Temperatur auf 130 °C an. Nach beendeter Zugabe wird 1 h lang bei 110 °C gerührt. Nach dem Abkühlen erhält man 257.2 g (99% d. Theorie) der Verbindung der Formel IV mit R¹ = R² = R³ = R⁴ = Methyl, X = Cl, Y = CH₂-CH₂-CH₃, Z = CH₂-CH₂-CH₂, m = 25, n = 5, p = 5 als hellgelbe Flüssigkeit.
   ¹H NMR (CDCl₃): δ -0.2 - 0.2 (m, 138 H, Si-CH₃), 0.34 (m, 10 H, CH₂-CH₂-CH₃), 0.46 (m, 10 H, CH₂-CH₂-CH₂-Cl), 0.82 (m, 15 H, CH₂-CH₂-CH₃), 1.25 (m, 10 H, CH₂-CH₂-CH₃), 1.68 (m, 10 H, CH₂-CH₂-CH₂-Cl) 3.37 (m, 10 H, CH₂-CH₂-CH₂-Cl) 4.56 (s, ¹*J*(¹H-²⁹Si) = 249.5 Hz, 25 H, Si-H).
2. Stufe: Zu einer Suspension von 26.2 g (150.0 mmol) Na₂S₄ in 300 ml Ethanol (W = Ethoxy) werden bei Raumtemperatur innerhalb von 45 min. 100.0 g (30.0 mmol) der Verbindung der Formel IV mit R¹ = R² = R³ = R⁴ = Methyl, X = Cl, Y = CH₂-CH₂-CH₃, Z = CH₂-CH₂-CH₂, m = 25, n = 5, p = 5 zugetropft. Während des Zutropfens entweicht Wasserstoff, und die Temperatur steigt auf 50 °C an. Gleichzeitig fällt ein Feststoff aus. Nach beendetem Zutropfen wird 6.5 h lang bei 80 °C (Refluxieren) gerührt. Danach läßt man abkühlen und filtriert vom entstandenen NaCl ab. Nach dem destillativen Entfernen des Lösungsmittels verbleiben 117.7 g (87.9% d. Theorie) der Verbindung der Formel I mit R¹ = R² = R³ = R⁴ = Methyl, A = Sₓ, W = Ethoxy, Y = CH₂-CH₂-CH₃, Z = CH₂-CH₂-CH₂, k = 7, m = 22, n = 5, p = 6.
   ¹H NMR (CDCl₃): δ -0.2 - 0.2 (m, 138 H, Si-CH₃), 0.42 (m, 10 H, CH₂-CH₂-CH₃), 0.54 (m, 12 H, CH₂-CH₂-CH₂-S), 0. 85 (m, 15 H, CH₂-CH₂-CH₃), 1.08 (s, 66 H, Si-O-CH₂-CH₃), 1.28 (m, 10 H, CH₂-CH₂-CH₃), 1.70 (s, 12 H, CH₂-CH₂-CH₂-S) 2.5 - 2.9 (m, 12 H, CH₂-CH₂-CH₂-S), 3.65 (m, 44 H, Si-O-CH₂-CH₃), 4.60 (s, ¹*J*(¹H-²⁹Si) = 249.6 Hz, 7 H, Si-H).

### Anwendungsbeispiele: Herstellung der Kautschukmischungen und Vulkanisate

### Allgemeine Durchführungsvorschrift

Die für die Kautschukmischungen verwendete Rezeptur ist in der Tabelle 1 angegeben. Dabei bedeutet die Einheit phr Gewichtsanteile, bezogen auf 100 Teile des eingesetzten Rohkautschuks.

**Tabelle 1**

| Substanz | Menge [phr] |
|---|---|
| 1. Stufe | |
| Buna VSL 5025-1 | 96.0 |
| Buna CB 24 | 30.0 |
| Ultrasil 7000 | 80.0 |
| ZnO | 3.0 |
| Stearinsäure | 2.0 |
| Naftolen ZD | 10.0 |
| Vulkanox 4020 | 1.5 |
| Protector G35P | 1.0 |
| Silan | 6.4 |
| Kopplungsreagenz | (in Bsp.4,7) |
| funkt. Silikonöl | 6.4 |
| gem. Bsp. 2 und 3 | (in Bsp.5,6) |

| 2. Stufe | |
|---|---|
| Batch Stufe 1 | |

| 3. Stufe | |
|---|---|
| Batch Stufe 2 | |
| Vulkacit D | 2.0 |
| Vulkacit CZ | 1.5 |
| Schwefel | 2.1 |

Bei dem Polymer VSL 5025-1 handelt es sich um ein in Lösung polymerisiertes SBR-Copolymer der Bayer AG mit einem Styrolgehalt von 25 Gew.-% und einem Butadiengehalt von 75 Gew.-%. Von dem Butadien sind 73 % 1,2, 10 % cis 1,4 und 17 % trans 1,4 verknüpft. Das Copolymer enthält 37,5 phr Öl und weist eine Mooney-Viskosität (ML 1+4/100°C) von 50 ±4 auf.

Bei dem Polymer Buna CB 24 handelt es sich um ein cis 1,4 Polybutadien (Neodymtyp) der Bayer AG mit cis 1,4-Gehalt von 97 %, einem trans 1,4-Gehalt von 2 %, einem 1,2-Gehalt von 1 % und einer Mooney-Viskosität von 44 ±5.

Die HD Kieselsäure Ultrasil 7000 der Degussa AG besitzt eine BET-Oberfläche von 180 m².

Bei dem Silan Bis-(3-[Triethoxysilyl]-propyl)disulfan (TESPD) handelt es sich um ein Silan mit einem Disulfananteil >80% und einen Polysulfananteil S(x>4) <4%. Dieser Stoff kann mit einem Verfahren gemäß Patent D 195 41 404 erhalten werden. Das Silan Propyltriethoxysilan (PTES) ist ein Alkylsilan, das von der Degussa AG unter dem Handelsnamen Si 203 vertrieben wird.

Als aromatisches Öl wird Naftolen ZD der Chemetall verwendet. Vulkanox 4020 ist 6PPD der Bayer AG und Protektor G35P ist ein Ozonschutzwachs der HB-Fuller GmbH. Vulkacit D (DPG) und Vulkacit CZ (CBS) sind Handelsprodukte der Bayer AG.

Die Kautschukmischung wird dreistufig in einem Innenmischer entsprechend der folgenden tabellarischen Aufstellung hergestellt:

**Tabelle 2:**

| **Stufe 1** | |
|---|---|
| **Einstellungen** | |
| Mischaggregat | Werner & Pfleiderer E-Typ |
| Friktion | 1:1,11 |
| Drehzahl | 70 min-1 |
| Stempeldruck | 5.5 bar |
| Leervolumen | 1.6 L |
| Füllgrad | 0.55 |
| Durchflußtemp. | 80 °C |

| **Mischvorgang** | |
|---|---|
| 0 bis 1 min | Buna VSL 5025-1 + Buna CB 24 |
| 1 bis 3 min | 1/2 Ultrasil VN3, ZnO, Stearinsäure, Naftolen ZD, Silan, ggf. Nukleophil |
| 3 bis 4 min | 1/2 Ultrasil VN3, Vulkanox 4020, Protector G35P |
| 4 min | säubern |
| 4 bis 5 min | mischen |
| 5 min | säubern |
| 5 bis 6 min | mischen und ausfahren |
| Batch-Temp. | 140-150°C |
| Lagerung | 24 h bei Raumtemperatur |

| **Stufe 2** | |
|---|---|
| **Einstellungen** | |
| Mischaggregat | wie in Stufe 1 bis auf: |
| Drehzahl | 80 min-1 |
| Füllgrad | 0.53 |
| Durchflußtemp. | 80 °C |

| **Mischvorgang** | |
|---|---|
| 0 bis 2 min | Batch Stufe 1 aufbrechen |
| 2 bis 5 min | Batchtemperatur 150°C durch Drehzahlvariation halten |
| 5 min | ausfahren |
| Batch-Temp. | 150-155°C |
| Lagerung | 4 h bei Raumtemperatur |

| **Stufe 3** | |
|---|---|
| **Einstellungen** | |
| Mischaggregat | wie in Stufe 1 bis auf |
| Drehzahl | 40 min*⁻¹ |
| Füllgrad | 0.51 |
| Durchflußtemp. | 50 °C |

| **Mischvorgang** | |
|---|---|
| 0 bis 2 min | Batch Stufe 2 + Vulkacit CZ + Vulkacit D + Schwefel |
| 2 min | ausfahren und auf Labormischwalzwerk Fell bilden |
| | (Durchmesser 200 mm, Länge 450 mm, Durchflußtemperatur 50°C) |
| | |
| | Homogenisieren: |
| | 3* links, 3* rechts einschneiden und umklappen sowie |
| | 8* bei engem Walzenspalt (1 mm) und |
| | 3* bei weitem Walzenspalt (3,5 mm) |
| | stürzen und |
| | anschließend ein Fell ausziehen |
| | |
| Batch-Temp. | 85-95°C |

Das allgemeine Verfahren zur Herstellung von Kautschukmischungen und deren Vulkanisate ist in dem "Rubber Technology Handbook", W. Hofmann, Hanser Verlag 1994 beschrieben.

Die Vulkanisationstemperatur beträgt 165°C.

Die gummitechnische Prüfung erfolgt gemäß den in Tabelle 3 angegebenen Prüfmethoden.

**Tabelle 3**

| Physikalische Testung | Norm/ Bedingungen |
|---|---|
| ML 1+4, 100°C | DIN 53523/3, ISO 667 |
| Vulkameterprüfung, 165°C | DIN 53529/3, ISO 6502 |
| Zugversuch am Ring, 23°C | DIN 53504, ISO 37 |
| Zugfestigkeit | |
| Spannungswerte | |
| Bruchdehnung | |
| Shore-A-Härte, 23°C | DIN 53 505 |
| Viskoelastische Eigenschaften, 0 und 60°C, 16 Hz, 50 N Vorkraft und 25 N Amplitudenkraft | DIN 53 513, ISO 2856 |
| Komplexer Modul E*, | |
| Verlustfaktor tan δ | |
| Dispersion | ISO/DIS 11345 |

### Beispiele 4 bis 7

Die Durchführung der Beispiele 4 bis 7 erfolgt gemäß der Allgemeinen Durchführungsvorschrift, wobei die Mischungen 4 (Silan Kopplungsreagenz: PTES) und 7 (Silan Kopplungsreagenz TESPD) Vergleichsbeispiele nach dem Stand der Technik sind.

In Abänderung zu den Vergleichsbeispielen 4 und 7, wird in der Mischung aus Beispiel 5 das schwefelfunktionalisierte Silikonöl gemäß Beispiel 2, und in Beispiel 6 das Silikonöl gemäß Beispiel 3 eingemischt.

Die gummitechnischen Daten für Rohmischung und Vulkanisat ergeben sich wie in Tabelle 4 aufgeführt.

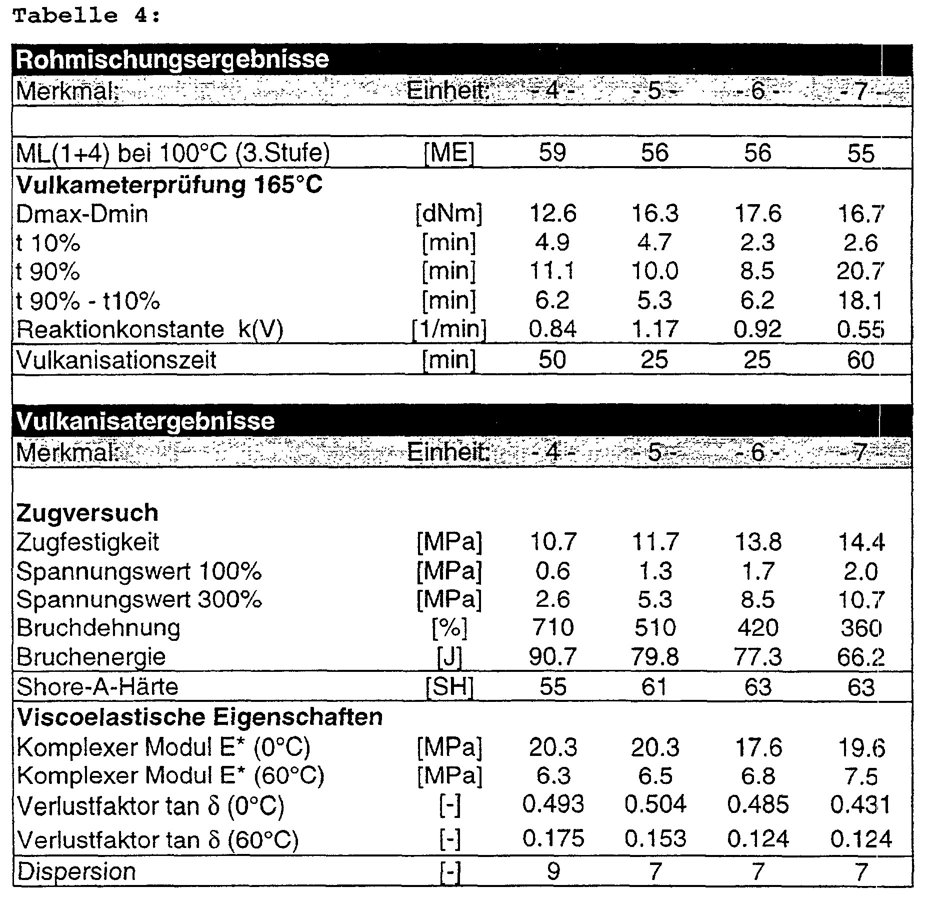

Anhand der niedrigen Mooney-Viskositäten der Mischungen 5 und 6 in Tabelle 4 ist ersichtlich, daß die beanspruchten Silikonöle die Kieselsäure ebensogut zu hydrophobieren vermögen, wie die Silane in den Vergleichsmischungen 4 und 7 nach dem Stand der Technik. Auch erkennt man, daß mit zunehmender Menge an Schwefelfunktionalitäten in den Silikonölen die Shore-A-Härte und die Spannungswerte gegenüber denen im Referenzbeispiel 4 deutlich ansteigen und in Beispiel 6 das Niveau des Beispiels 7 nahezu erreicht wird. Zudem ist bei den funktionalisierten Silikonöl in Beispiel 6 ein vorteilhaft hoher tan δ (0°C) Wert auffällig, der mit einem verbesserten Naßrutschverhalten korreliert; ohne Einbußen beim tan δ (60°C) Wert, der mit dem Rollwiderstand zusammenhängt.

Besonders vorteilhaft gegenüber dem Referenzbeispiel 7 ist bei den funktionalisierten Silikonölen die schnelle Vulkanisationskinetik. Hier sind insbesondere die kurzen t90%-t10% Zeiten und die höheren Reaktionskonstanten k(V) (Reaktion 1.Ordnung) zu nennen.

## Patentansprüche

1. Schwefelfunktionelle Polyorganosiloxane der allgemeinen Formel I 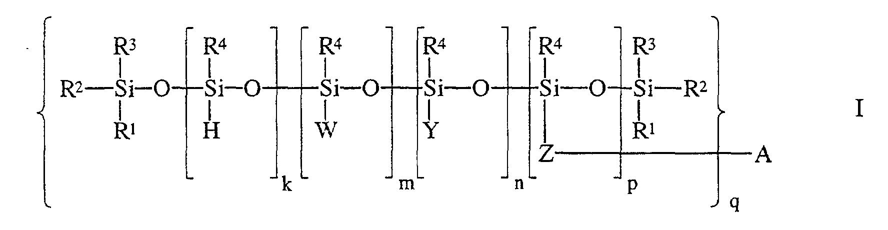 worin
R¹, R², R³, R⁴ unabhängig voneinander, H, (C₁ - C₄)Alkyl, (C₁ - C₄)Alkoxy, (C₁ - C₄)Haloalkoxy, (C₁ - C₄)Haloalkyl, Phenyl, Aryl oder Aralkyl und
W für eine Gruppe steht, die an die Kieselsäure binden kann, bevorzugt (C₁ - C₄)Alkoxy oder (C₁ - C₄)Haloalkoxy und
Y Alkyl, Haloalkyl, Phenyl, Aryl oder Aralkyl und
Z einen Alkylidenrest mit 0 - 6 Kohlenstoffatomen bedeuten und
A für eine Gruppe steht, die eine Bindung mit mindestens einem Elastomer der Kautschukmischung eingehen kann: für q = 1 bevorzugt eine Mercapto-(SH) und
Thiocyanatogruppe (SCN) und für q = 2 ein Disulfid (S₂) und ein Polysulfid (Sₓ) mit x = 2 - 10 und H für Wasserstoff steht und die Summe k + m + n + p ≥ 3 sowie k = n = 0 sein kann.

2. Verfahren zur Herstellung der schwefelfunktionellen Polyorganosiloxane gemäß Anspruch 1,
**dadurch gekennzeichnet,**
**daß** Verbindungen der allgemeinen Formel IV 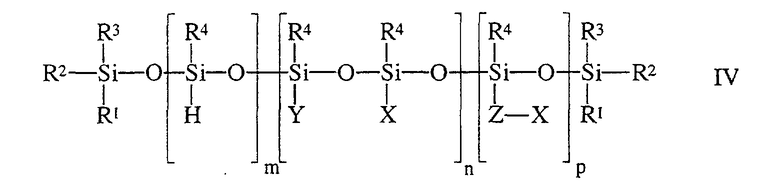 worin
R¹, R², R³, R⁴, Y, Z, m, n und p die in Anspruch 1 angegebene Bedeutung besitzen, X gleich Halogen sein kann, mit MSH, MSCN oder M₂Sₓ, wobei M ein Metallion und x im statistischen Mittel eine Zahl zwischen 2 und 10 sein kann oder mit M₂S und S, wobei M ein Metallion ist, in einem Alkohol W-H, worin W die in Anspruch 1 angegebene Bedeutung besitzt, und gegebenenfalls bei Reaktionstemperaturen zwischen 20 °C und 150 °C und gegebenenfalls unter katalytischen Bedingungen bei Normaldruck zu neuen Verbindungen der allgemeinen Formel I umgesetzt werden.

3. Verfahren gemäß Anspruch 2,
**dadurch gekennzeichnet,**
**daß** das Metallion ein Ammoniumion, Natriumion oder Kaliumion ist.

4. Verwendung der schwefelfunktionellen Polyorganosiloxane gemäß Anspruch 1 in Kautschukmischungen.

5. Kautschukmischungen, enthaltend schwefelfunktionelle Polyorganosiloxane gemäß Anspruch 1.

6. Kautschukmischungen gemäß Anspruch 5,
**dadurch gekennzeichnet,**
**daß** die schwefelfunktionellen Polyorganosiloxane in einer Menge von 0,1 bis 15 Gew.-%, bevorzugt 5 bis 10 Gew.-% bezogen auf die Menge des eingesetzten Füllstoffs, enthalten sind.

7. Kautschukmischungen gemäß Anspruch 5 oder 6,
**dadurch gekennzeichnet, daß** sie einen Synthesekautschuk und eine Kieselsäure als Füllstoff enthalten.

8. Verfahren zur Herstellung von Kautschukmischungen gemäß einem der voranstehenden Ansprüche 5 bis 7,
**dadurch gekennzeichnet, daß** neben dem Kautschuk mindestens ein weiterer Füllstoff und ein schwefelfunktionalisiertes Polyorganosiloxan gemäß Anspruch 1 verwendet wird.

9. Formkörper, erhältlich aus einer Kautschukmischung gemäß einem der Ansprüche 5 bis 7.

10. Formkörper gemäß Anspruch 9,
**dadurch gekennzeichnet, daß** es sich um einen Luftreifen handelt.

11. Formkörper gemäß Anspruch 9,
**dadurch gekennzeichnet, daß** es sich um eine Reifenlauffläche handelt.

12. Verwendung der Kautschukmischungen gemäß einem der Ansprüche 5 bis 7 zur Herstellung von Formkörpern, insbesondere Luftreifen oder Reifenlaufflächen.

13. Verwendung von Verbindungen der allgemeinen Formel IV, gemäß Anspruch 2 zur Herstellung schwefelfunktionalisierter Polyorganosiloxane gemäß Anspruch 1.

## Revendications

1. Polyorganosiloxane contenant du soufre de formule générale I 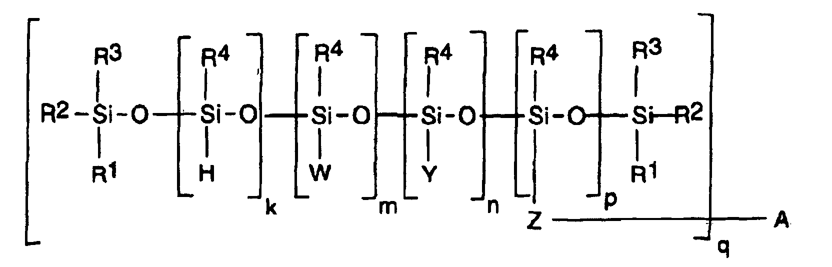 **caractérisé en ce que**
les radicaux suivants : R¹, R², R³, R⁴ sont de façon indépendante un H, un alkyle (C₁-C₄), un alkoxy (C₁-C₄), un alkoxy halogéné (C₁-C₄), un alkyl halogéné (C₁-C₄), un phényle, un aryle ou un aralkyle,
W est un groupe lié à la silice, de préférence un alkoxy (C₁-C₄) ou un alkoxy halogéné(C₁-C₄),
Y est un alkyle, un alkyle halogéné, un phényle, un aryle ou un aralkyle
Z est un reste d'alkyle, ayant de 0 à 6 atomes de carbone,
A est un groupe capable de se connecter par une liaison avec au moins un élastomère du mélange de caoutchouc : pour q = 1 de préférence un groupe mercapto (SH) et un groupe thiocyanate (SCN), et pour q = 2 un bisulfure (S₂) et un polysulfure (Sₓ) avec x = 2 - 10 et H, le total k + m + n + p ≥ 3, il est possible que k = n = 0.

2. Procédé de fabrication de polyorganosiloxanes contenant du soufre selon la revendication 1,
**caractérisé par**
la formule générale IV 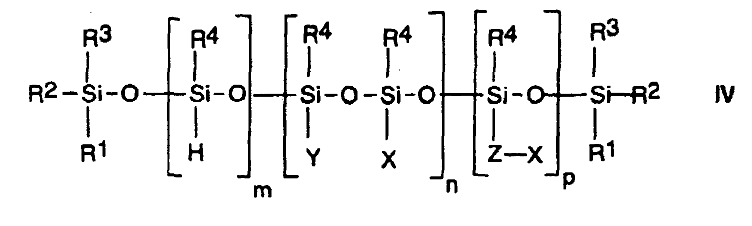 dans laquelle les radicaux R¹, R², R³, R⁴, Y, Z, et les indices m, n et p sont définis dans la revendication 1, X peut être un halogène avec MSH, MSCN ou M₂Sₓ, où M est un ion métallique et x est un nombre entier entre 2 et 10, ou M₂S et S, où M est l'ion de métal, dans un alcool W-H, où W est défini dans la revendication 1, de préférence la température de réaction est comprise entre 20°C et 150°C, la réaction de formation du nouveau composé (formule I) se produit dans des conditions catalytiques, à la pression normale.

3. Procédé selon la revendication 2,
**caractérisé en ce que** l'ion métallique est l'ion ammonium, l'ion sodium ou l'ion potassium.

4. Utilisation selon la revendication 1, des polyorganosiloxane contenant du soufre dans des mélanges de caoutchoucs.

5. Mélanges de caoutchoucs, contenant des polyorganosiloxanes contenant du soufre selon la revendication 1.

6. Mélanges de caoutchoucs selon la revendication 5,
**caractérisés en ce que**
le mélange comporte de 0,1 à 15 % en poids de polyorganosiloxane contenant du soufre, de préférence de 5 à 10 % en poids par rapport à la masse de remplissage.

7. Mélanges de caoutchoucs selon les revendications 5 ou 6,
**caractérisés en ce qu'**
ils contiennent un caoutchouc de synthèse et une silice comme matières de remplissage.

8. Procédé de fabrication de mélanges de caoutchoucs selon les revendication 5 à 7, qui utilise un polyorganosiloxane, selon la revendication 1, contenant du soufre et au moins une autre matière de remplissage.

9. Corps de pneumatique fabriqué à partir d'un mélange de caoutchoucs selon les revendications 5 à 7.

10. Mélange pour les corps de pneumatiques selon la revendication 9,
**caractérisé en ce qu'**
il s'agit des pneumatiques pour avions.

11. Mélange pour corps de pneumatiques selon la revendication 9,
**caractérisé en ce qu'**
il s'agit des bandes de roulement de pneumatiques.

12. Utilisation des mélanges de caoutchouc selon les revendications 5 à 7 à la fabrication de formes de corps, en particulier des pneumatiques pour avions ou des bandes de roulement de pneumatiques.

13. Utilisation des composés de la formule générale IV, selon la revendication 2, pour la fabrication de polyorganosiloxanes contenant du soufre, selon la revendication 1.

## Claims

1. Sulfur-functional polyorganosiloxanes corresponding to the general formula I 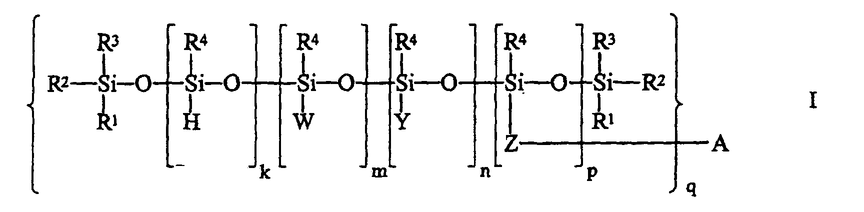 wherein
R¹, R², R³, R⁴, independently of one another, denote H, (C₁ - C₄)alkyl, (C₁ - C₄)alkoxy, (C₁ - C₄)haloalkoxy, (C₁ - C₄)haloalkyl, phenyl, aryl or aralkyl and
W denotes a group which can bond to the silica and preferably can be (C₁ - C₄)alkoxy or (C₁ - C₄)haloalkoxy and
Y denotes alkyl, haloalkyl, phenyl, aryl or aralkyl and
Z denotes an alkylidene group having 0 - 6 carbon atoms and
A denotes a group which can bond with at least one elastomer of the rubber mixture:
for q = 1 preferably a mercapto group (SH) and thiocyanate group (SCN) and for q = 2 a disulfide (S₂) and a polysulfide (Sₓ) with x = 2 - 10 and H denotes hydrogen and the sum of k + m + n + p ≥ 3 and k and n can equal 0.

2. Process for the preparation of the sulfur-functional polyorganosiloxanes according to claim 1,
**characterised in that**
the compounds corresponding to the general formula IV 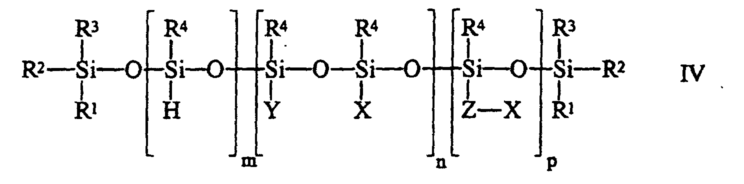 wherein
R¹, R², R³, R⁴, Y, Z, m, n and p have the meanings given in claim 1, X can be halogen, are reacted with MSH, MSCN or M₂Sₓ, wherein M can be a metal ion and x on statistical average can be a number between 2 and 10, or with M₂S and S, wherein M is a metal ion, in an alcohol W-H, wherein W has the meaning given in claim 1, optionally at reaction temperatures between 20 °C and 150 °C and optionally under catalytic conditions at normal pressure, to form new compounds corresponding to the general formula I.

3. Process according to claim 2,
**characterised in that**
the metal ion is an ammonium ion, sodium ion or potassium ion.

4. Use of the sulfur-functional polyorganosiloxanes according to claim 1 in rubber mixtures.

5. Rubber mixtures, containing the sulfur-functional polyorganosiloxanes according to claim 1.

6. Rubber mixtures according to claim 5,
**characterised in that**
the sulfur-functional polyorganosiloxanes are contained therein in a quantity of 0.1 to 15 wt.%, preferably 5 to 10 wt.%, based on the quantity of filler used.

7. Rubber mixtures according to claim 5 or 6,
**characterised in that**
they contain synthetic rubber and a silica as filler.

8. Process.for the preparation of rubber mixtures according to one of the preceding claims 5 to 7,
**characterised in that**
in addition to the rubber, at least one other filler and a sulfur-functionalised polyorganosiloxane according to claim 1 are used.

9. Mouldings, obtainable from a rubber mixture according to one of claims 5 to 7.

10. Mouldings according to claim 9,
**characterised in that**
they are pneumatic tyres.

11. Mouldings according to claim 9,
**characterised in that**
they are tyre treads.

12. Use of the rubber mixtures according to one of claims 5 to 7 for the production of mouldings, in particular of pneumatic tyres or tyre treads.

13. Use of compounds corresponding to the general formula IV, according to claim 2, for the preparation of sulfur-functionalised polyorganosiloxanes according to claim 1.
